# EUROPEAN PATENT SPECIFICATION

(11) **EP 2 536 540 B1**
(45) Date of publication and mention of the grant of the patent: **15.08.2018**
(21) Application number: 11705235.7
(22) Date of filing: 16.02.2011
(51) Int. Cl.: B26D 1/547, B65H 49/00

(54) **WIRE HANDLING FOR VEHICLE GLAZING PANEL CUT OUT**
HANDHABUNG EINES DRAHTES ZUM HERAUSTRENNEN DER GLASSCHEIBE EINES FAHRZEUGS
MANIPULATION DES ÉLÉMENTS FILAIRES POUR COUPE D'UN PANNEAU DE VERRE POUR UN VÉHICULE

(30) Priority: 19.02.2010 GB 201002856
(43) Date of publication of application: 26.12.2012
(73) Proprietor: Belron International Limited, Egham, Surrey TW20 9EL (GB)
(72) Inventor: FINCK, William, Essex CM15 9EP (GB)
(74) Representative: Davies, Gregory Mark
(86) International application number: PCT/GB2011/050299
(87) International publication number: WO 2011/101667

(56) References cited:
- EP-A1- 2 191 944
- WO-A1-2004/103748
- DE-U1- 29 711 291
- GB-A- 2 465 847
- US-A- 3 952 965
- US-A- 4 316 866
- US-A- 4 787 168
- US-A1- 2008 012 349

## Description

The present invention relates to wire handling for vehicle glazing panel cut out techniques. Vehicle glazing panels such as vehicle windscreens (windshields) are typically bonded in supporting frames by adhesive bonding material such as polyurethane, applied in a continuous bead about the periphery of the glazing panel and frame.

Wire cutting techniques have been previously proposed and used to effect glazing panel removal (for replacement or otherwise). Exemplary techniques are disclosed in, for example, EP-A-0093283, Canadian Patent Specification 2034221, US Patent 6616800, German Patent 4012207 and PCT Publications WO2006/030212, WO86/07017 and WO98/58779 US 2002/0121330 A1 can be regarded to be the closest prior art and discloses a cut out system with a mounting device arranged to be mounted on a glazing panel having a spool that serves as a wire store device. The device having a spool ratchet that can be unlocked to unwind and dispense a cutting wire. An improved technique and apparatus has now been devised which aids in cutting out a windscreen by having a dispenser unit for dispensing cutting wire the dispenser having means for mounting to the glazing panel and enabling cutting wire to be payed out from the dispenser whilst mounted to the glazing panel during the cut out procedure. A wire winder unit is typically mounted on the windscreen, the winder unit including one or more winder spools. The winder unit may be moved about the screen between several mounted positions with separate respective cuts being effected at the different mounted positions. When the setting a wire dispenser unit is initially set on the windscreen, the cutting wire may be looped about the periphery of the glazing panel and a free end of the wire payed out from the dispenser may be connected to the winder spool of the winder unit.

Typically the winder spool of the winder unit is operated to wind the wire and thereby cut the bonding material, wherein during cutting wire is payed out from the dispenser unit in order to effect slip cutting of the bonding material.

The present invention provides a dispensing system in accordance with the appended claims.

It is preferred that the rotary means is controllable to adjust the applied torque required to operate the rotary means. Adjustable brake means may be provided for this purpose, preferably being operable to adjust the applied torque required to operate the rotary means.

In one embodiment, the adjustable brake means preferably comprises a friction brake which is tightenable to increase the braking effect, or relaxable to reduce the braking effect.

In a preferred embodiment, when in docked engagement a spool of the store is coupled for rotation with the rotary device.

In certain embodiments it may be preferred that the store device has a central aperture for accommodating the rotary device in docked demountable engagement.

In a preferred realization, the engaging docking formations are arranged to permit the store to be mounted and demounted from the docking device but ensure that the store and docking device are coupled for rotation together in unison when in the docked configuration.

Where adjustable brake means is utilized this may beneficially be operated by a cam and lever arrangement.

In a preferred embodiment, the mounting device for securing on the glazing panel comprises a suction mount.

The invention will now be further described in a specific embodiment by way of example only and with reference to the accompanying drawings, in which;
Figure 1 is a schematic plan view of a winder unit of an exemplary cut out system in accordance with the invention;
Figures 2 to 4 are schematic representations in sequence of a cut out technique;
Figures 5 to 8 are schematic perspective views of a wire store device according to the invention;

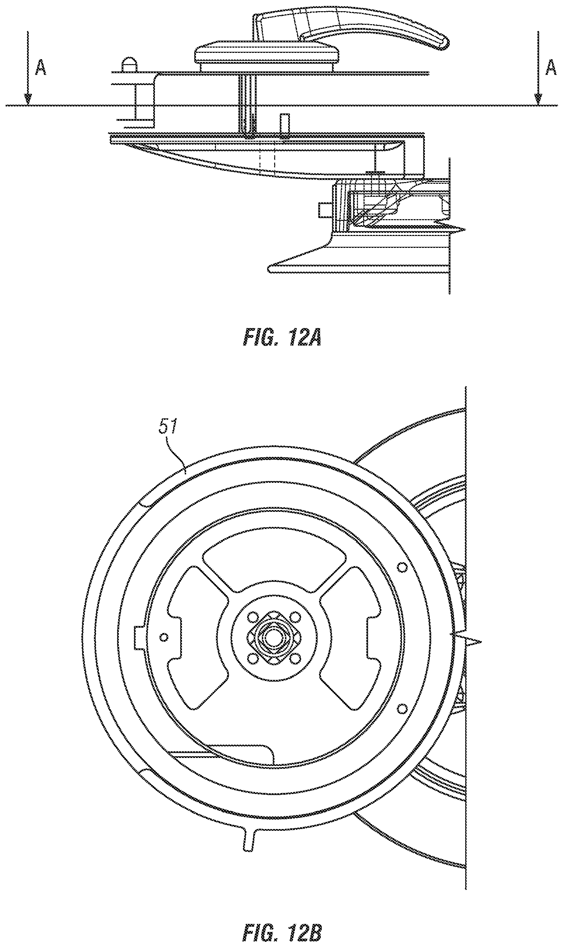

Figures 9 to 12 are schematic perspective, plan and sectional views respectively of a wire dispensing system in accordance with the invention;

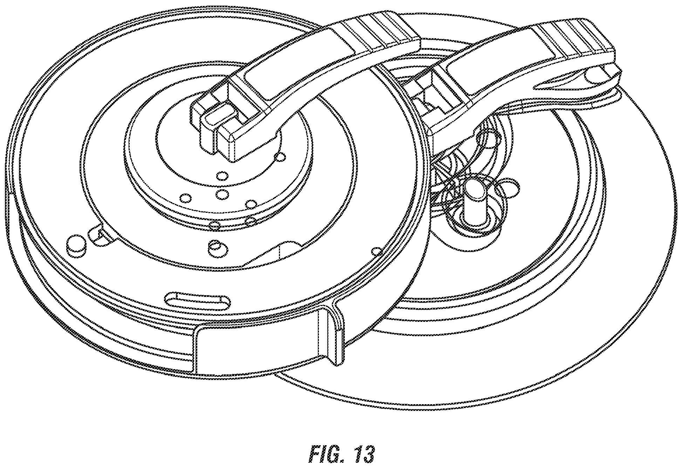

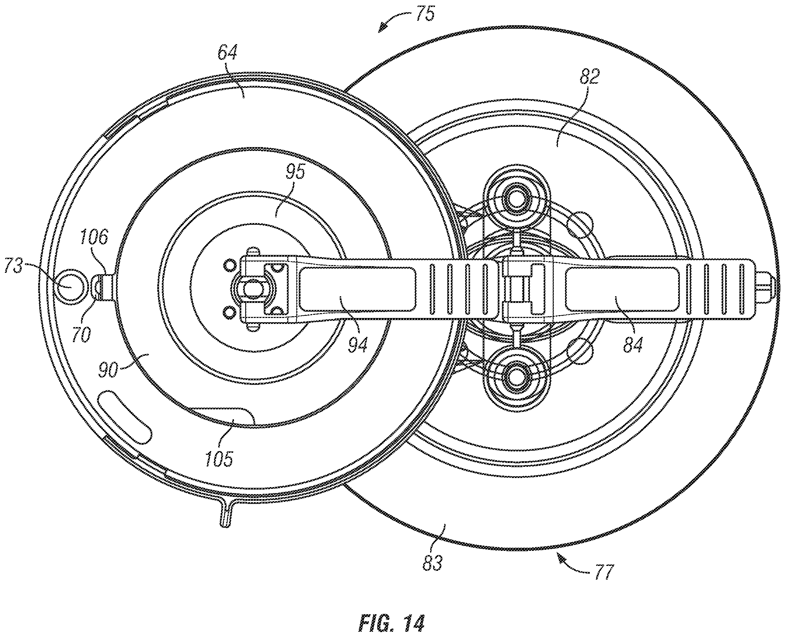

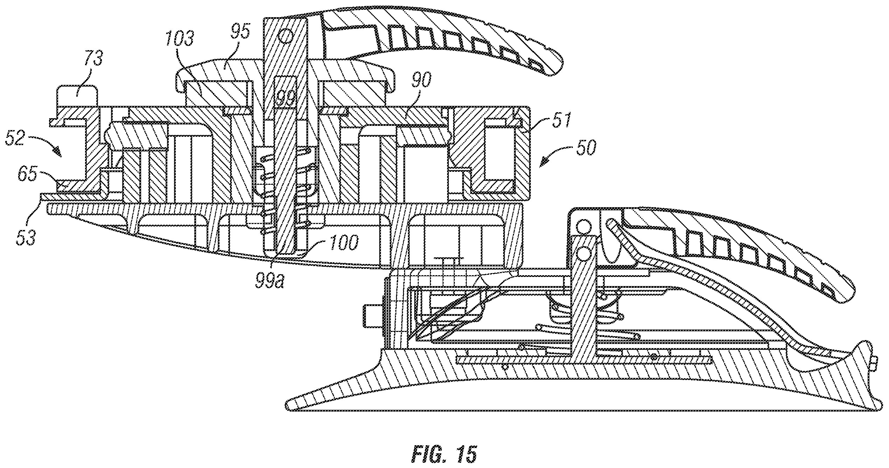

Figures 13 to 15 are schematic perspective, plan and sectional views respectively of a wire dispensing system in accordance with the invention, loaded with a wire store device according to the invention.

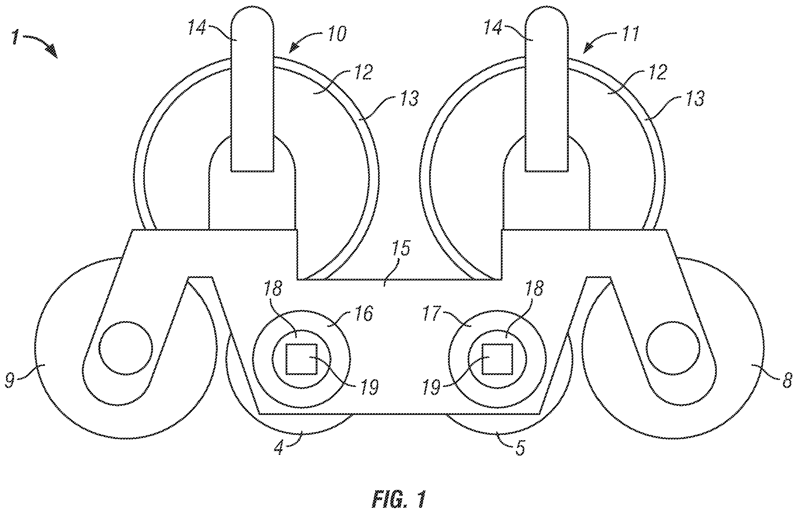

Referring to the drawings, and initially to figures 1 to 4, there is shown a cut out system particularly for use in cut out of bonded vehicle glazing panels such as windscreens. The cut out system comprises a winder unit 1 and a wire dispenser unit 2.

The winder unit 1 comprises a pair of releasable suction cup mounts 10, 11 enabling the winder unit to be releasably secured to the windscreen. The suction cup mounts comprise a rigid plastics cup 12 and underlaying flexible rubber skirt membrane 13. Respective actuation/release levers 14 enable consistent suction to be applied and released. Such suction mounts are commonly employed in windscreen replacement and repair technology. The suction cup mounts 10, 11 are pivotably/tiltably mounted to the support bracket 15 of the winder unit to ensure that both mounts 10, 11 can locate in good engagement with the windscreen despite the curvature of the windscreen. The main body of the support bracket 15 carries a pair of underslung winding spools 4, 5 in side by side relationship. The spools are connected to axial winding shafts which are supported in bearings 16, 17 provided on the winder unit. The spools 4, 5 are driven axially rotationally either manually via a hand winder or by means of a mechanical actuator such as a motorised winding or winching tool.

Drive bosses 18 are provided with female sockets 19 (square bores) for receiving the male driving tool. Positioned outwardly of the winding spools are respective wire guide pulley wheels 8, 9 of low friction plastics material. The pulley wheels are mounted to be rotatable about respective rotational axes. The guide pulleys rotate as the cutting wire is drawn tangentially across the pulleys as will be described. The winder spools 4, 5 are held to rotate in one direction only (each in opposite senses) by respective ratchet mechanisms. Each mechanism includes ratchet override permitting prior tightened wire to be slackened, or unwound (reverse wound).

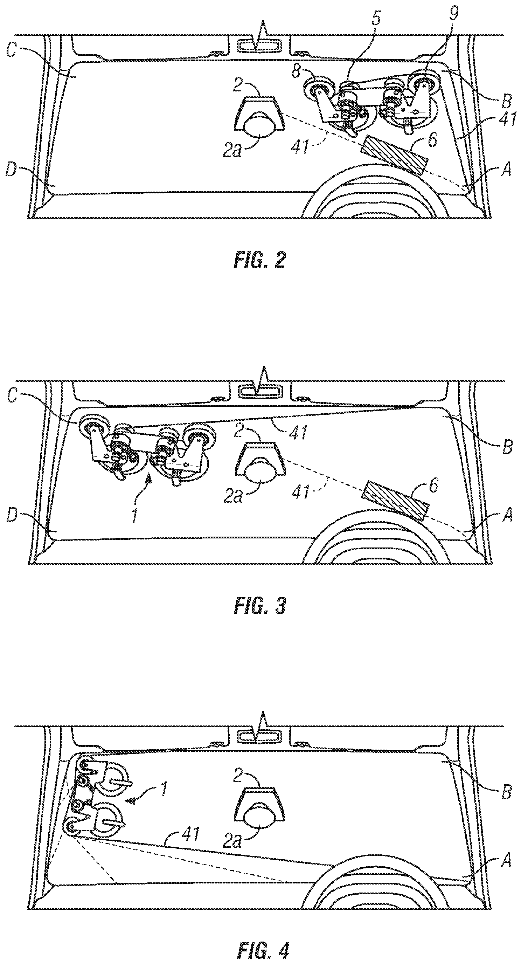

The winder unit 1 is secured internally of the vehicle to the surface of the glazing panel 3 above the steering wheel as shown in figure 2. A wire store which also acts as a dispenser spool 2 is secured to the exterior surface of the glazing panel 3 and the wire 41 is wrapped around the external peripheral edge of the glazing panel staring at corner A and proceeding to corners B C and D. The wire subsequently passes adjacent the lowermost edge of the screen (from D toward A) where a free end is pulled through an aperture made in the PU bonding bead at the corner A, such that the free end of the wire can be attached to winder spool 5. An adhesive tape patch 6 is secured to the screen over the wire. The dispenser spool 2 includes a sucker mount 2a and an internal wire dispenser cartridge which is free to rotate in a housing so as to pay out wire from the dispenser spool as tension of a required magnitude is put upon the wire. The adhesive tape patch is used to give resistance to paying out of the wire from the spool. Other brake devices (typically resistance or friction providing devices may be used in addition to or as an alternative to the adhesive patch 6).

Removal is commenced by winding the spool 5 to move the cut from the corner A upwardly along the side edge and around corner B. During cutting, if excessive resistance occurs, from tough or large PU adhesive beads, the wire is able to spool off the dispenser spool 2 and slip and slice past the PU adhesive in what can be referred to as 'slip cutting'. The use of the spool dispenser mounted on the windscreen enables this 'slip cutting' to occur early in the cut out procedure and without pre cutting of the other free end of the wire 41. Once the cutting wire 40 has travelled around the corner B, the winder unit 1 is moved across the windscreen to the other side and re-secured to the windscreen in the configuration shown in figure 3. Prior to repositioning the unit 1, the ratchet of winder spool 5 is released to permit the wire to be wound out from the spool 5 as it is moved across the glazing panel to be repositioned. The ratchet is subsequently re-engaged and spool 5 once again operated to wind in the wire.

When the cut has almost been completed along the top edge, the winder unit is rotated through 90 degrees and re-secured as shown in figure 4. The cut is then progressed such that the cut position passes around the corner C. The adhesive tape 6 is next removed and enough wire is payed out from the dispenser spool 2 to reach and be wound on the winder spool. The measured length of wire is then cut from the dispenser spool and the cut free end is pulled into the vehicle either by prising out the already released corner of the windscreen to form a small gap, or insertion of the free wire end through the pre-formed hole in the PU bonding material at corner A. The free end of the wire 41is then connected to the spool 4 (passing around pulley 8). The winder spool 4 is then operated to wind in the wire, in so doing cutting along the bottom edge.

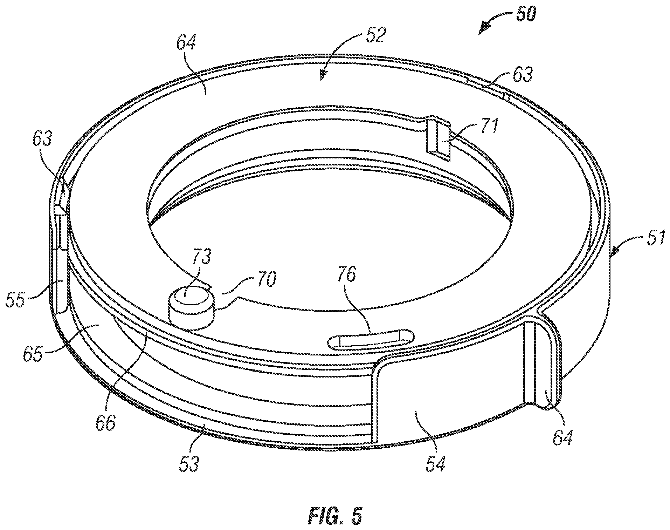

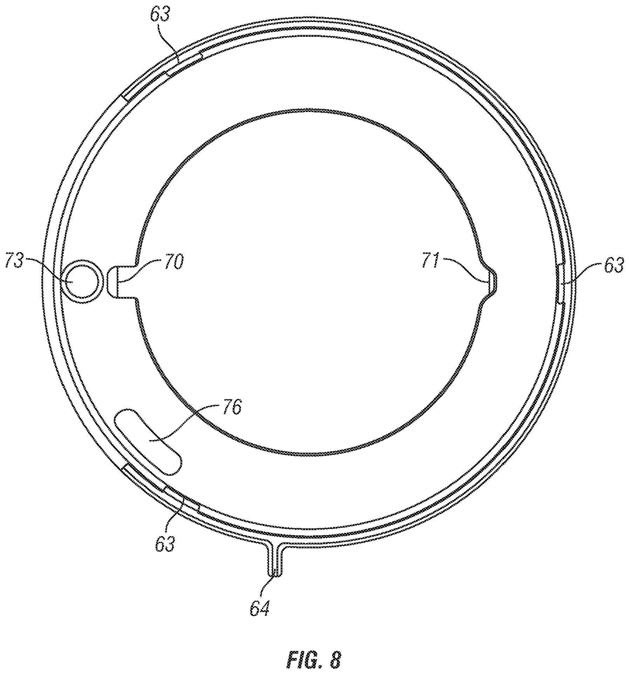

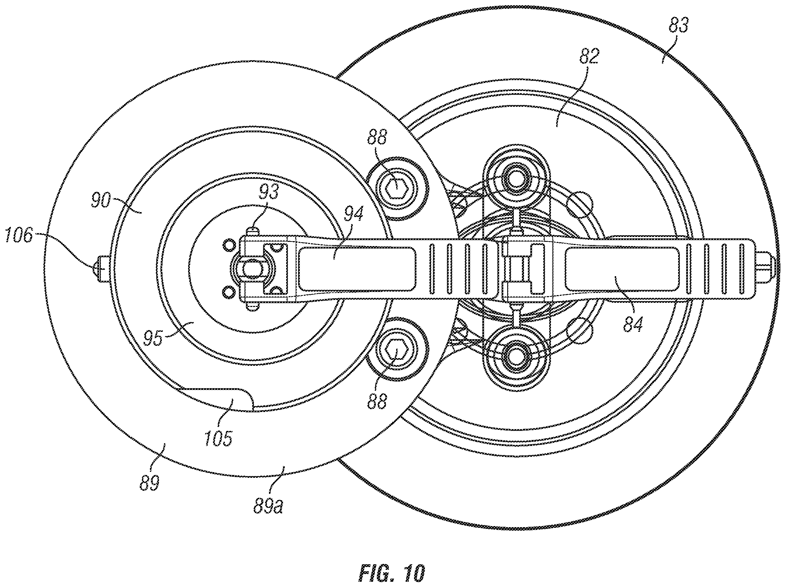

The wire store/dispenser device 50 according to the present invention is shown in figures 5 to 10 and provides advantages over the store/dispenser described above.

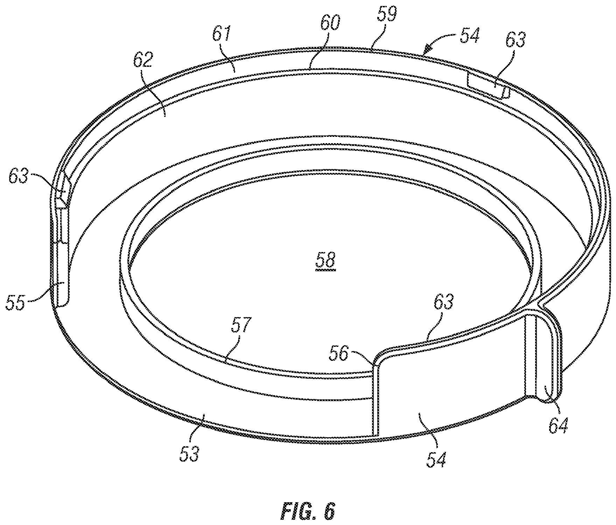

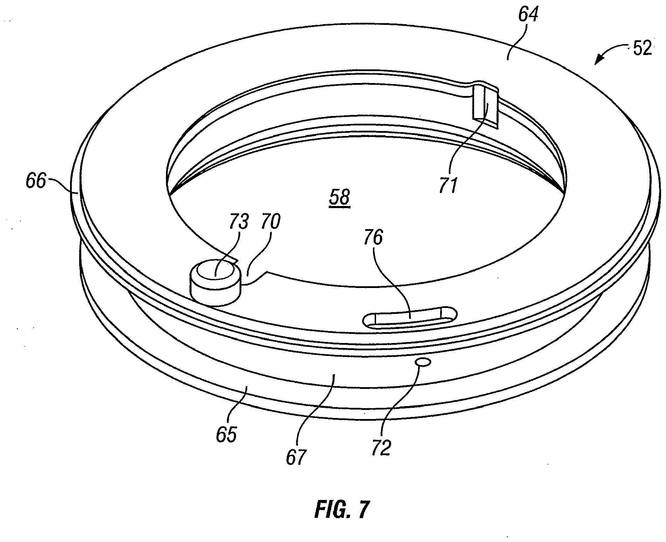

The store/dispenser device 50 as shown in figure 5 comprises an annular outer sleeve or housing 51 and which receives, seated therein, a spool body 52 upon which wire is wound. The spool body 52 and outer sleeve housing 51 are assembled to be rotatable relative to one another. The spool body is shown in isolation in figure 7. The sleeve housing 51 is shown most clearly in figure 6 and can be seen to have an annular base 53 and an upstanding outer wall 54 which extends most of the way around the periphery of the device 50 but is provide with terminal upright edges 55 56 defining a peripheral opening devoid of the wall 54. An inner circumferential upstanding lip 57 extends all around the central void 58 of the sleeve 51. Towards the upper rim 59 of the peripheral upstanding wall 54 there is a shoulder 60 between the upper radial inner surface 61 of the wall 54 and the lower radial inner surface 62 of the wall 54. The surface 61 is spaced radially outwardly of the surface 62. A series of clip projections 63 are spaced around the upper radial inner surface of the wall. A stop tab 64 is provided projecting radially outwardly from the outer surface of the wall 54.

As shown in figure 7, the wire spool body 52 has an upper surface 64, an upper flange 66 just below the upper surface 64, the upper flange 66 extending radially outwardly. The item 52 also has a bottom flange 65 and a recessed annular wall 67 upon which the wire is wound. In order to assemble the device 50 the spool body 52 is pushed downwardly into the sleeve 51 until the bottom flange 65 rests on the base 53 of the sleeve 51. In so assembling the sleeve and the spool the clip projections deform and snap fit secure above the upper flange 66 of the spool 52. In this way the spool body 52 is held captive with respect to the sleeve but relative rotation is permitted between the two components. The wire spool 52 is provided with recesses 70 71 on opposed internal circumferential walls for locating on formations provided on a rotary capstan device 90 of a mount device 75 as will be described later. A winding projection 73 is provided on the upper surface 64 of the wire spool 52 enabling hand winding of the spool body 52 with respect to the sleeve 51. The recessed annular wall 67 is provided with a wire insertion aperture 72 angled to extend completely through the wall and permitting an end of the wire to be inserted and secured with respect to the spool body 52. The upper surface 64 is provided with a viewing aperture 76 to enable the insertion aperture to be viewed from above.

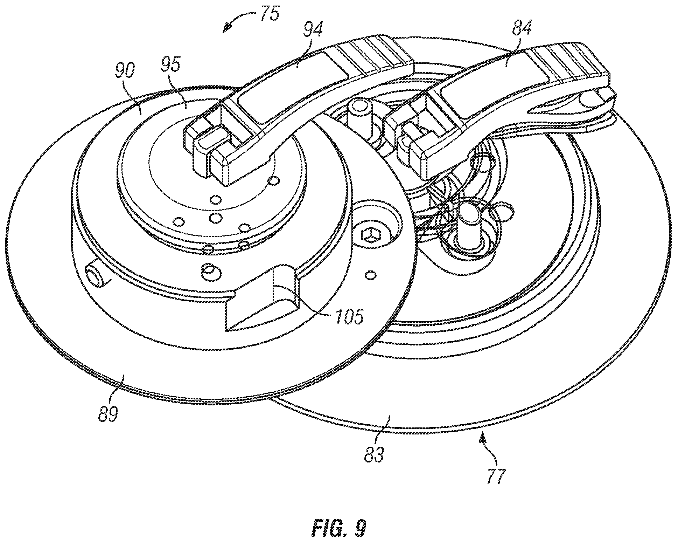

The mount device 75 to which the store/dispenser device 50 is mounted for dispensing the wire is best shown in figures 9 to 11. The mount device comprises a releasable suction cup mounts 77 enabling the mount device to be releasably secured to the windscreen. The suction cup mounts comprise a rigid plastics cup 82 and underlaying flexible rubber skirt membrane 83. Actuation/release lever 84 enables consistent suction to be applied and released. As mentioned previously such suction mounts are commonly employed in windscreen replacement and repair technology. On the opposed side of the mount device 75 to the position occupied by the lever 84 when in the down or engaged position is a moulding 86 which received securing bolts 88 for a mounting platform 89 to which a rotary capstan 90 is mounted. The mounting platform 89 has a peripheral flange surface 89a extending outwardly from the rotary capstan 90 which is generally cylindrical in profile and rotationally mounted with respect to the platform 89 by means of a central aperture 91 which is mounted on the peripheral outer cylindrical surface of a stationary bush 92. An actuation/release lever 94 pivots about pin fixing 93 and in doing so cams against a reaction cap 95 which has a central stem tube 95a which is received in a central axial bore of the stationary bush 92. This cam action tends to force the reaction cap 95 downwardly. The bottom end of the stem tube 95a engages against a compression spring 97 to counteract the downward force and movement of the reaction cap 95 and stem tube 95a.

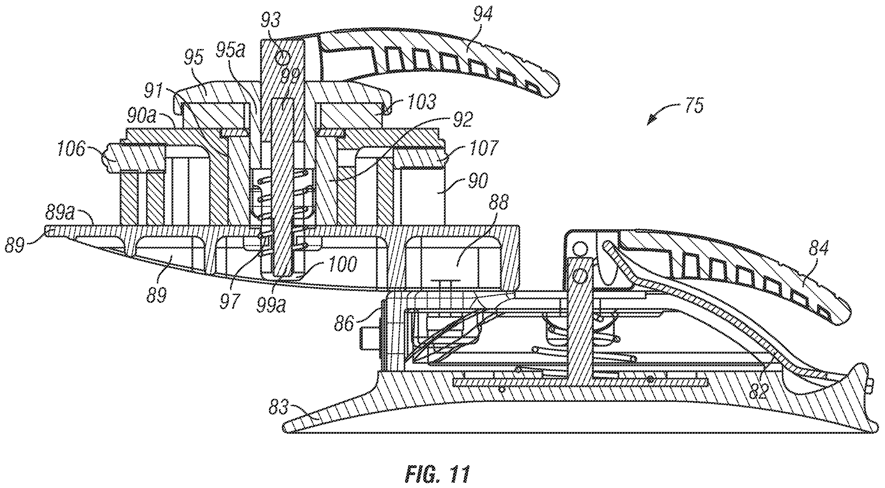

Effectively therefore the reaction cap is biased upwardly to an equilibrium position by the spring 97. When the lever is moved to its actuation position (the position shown in figure 11) the reaction cap 95 and stem tube 95a move downwardly and the spring becomes compressed. An axial rod 99 which is threaded at its lower end 99a is received in a threaded bore in a receiving boss 100 provided in platform 89. By rotating the axial rod 99 about its longitudinal axis (by the lever when orientated in its upright position), the reaction cap 95 and stem tube 95a move upwardly or downwardly with respect to the upper surface 90a of the rotary capstan 90. A conformable or compression disc 103 (such as felt disc) is mounted to the underside of the reaction cap 95.

When the lever is moved to its actuation position (the position shown in figure 11) the reaction cap 95 and stem tube 95a move downwardly and the spring becomes compressed. Depending upon the degree to which the reaction cap 95 and stem tube 95a have move upwardly or downwardly with respect to the upper surface 90a of the rotary capstan 90 as a result of the rotation of the axial rod 99 about its longitudinal axis, the compression disc 103 (which effectively acts as a brake disc) may either be clear of the upper surface 90a of the rotary capstan 90, or forced into engagement with the upper surface 90a of the rotary capstan 90, thereby acting as a brake to rotation of the capstan 90 on the platform 89. In this way, the dispensing device includes a braking mechanism, which is readily adjustable with respect to the braking force applying during paying out of the wire. The degree of braking achieved will depend upon the degree to which the axial rod has been rotated in the clockwise or counter-clockwise sense. At one extreme there may be no frictional engagement between the compression disc 103 and the upper surface 90a of the rotary capstan 90, in which case the rotary capstan can rotate freely. At the other extreme there will be maximum engagement between the compression disc 103 and the upper surface 90a of the rotary capstan 90, in which case the rotary capstan may be prevented from rotating at all. In between these two extremes the torque required to rotate the capstan will vary depending upon the position of the axial rod 99. As a result it is possible to finely adjust the braking acting on the capstan.

The rotary capstan 90 is provided on opposed circumferential wall portions, with detents 106 107 which are arranged to match up and engage in the recesses 70 71 on opposed internal circumferential walls of the wire spool 52 as the wire store 50 is docked downwardly to rest on the platform flange 89a, settling snugly about the outer surface of the capstan. The engagement recesses 70 71 are shaped to cooperate with the detents 106 107 such that once engaged the spool 52 is effectively rotationally locked with respect to the capstan 90 such that the capstan and the spool 52 rotate in unison (unless rotation is effectively inhibited by the braking mechanism earlier described). It should be noted that the housing 51 does not rotate in unison with the capstan and the spool body 52 ensuring that the dispensing gap between the edges 55 56 of the wall 54 remains in position.

However, the engagement between the detents 106 107 and the recesses is such that the store device 50 can be lifted upwardly clear of the capstan 90, from the docked position with relatively little manual force applied. To this end the engagement formations (either the detents 106 107 or the recesses 70 71) are preferably linear formations extending upwardly/ downwardly with respect to the circumferential walls of the capstan 90 and the spool 52. The recesses 70 71 preferably comprise slots or channels. The capstan 90 also includes a recess 105 for accommodating the end portion of the wire that extends through the wire aperture 72 in the store dispenser device 50.

When a store/dispenser device 50 is loaded with wire and secured to the mount device 75, wire can be drawn from the store/dispenser device 50 and used in a similar way to the wire store dispenser device 2 as described in relation to figures 2 to 4.

Several advantages are however realised by the invention over the store dispenser device as described in relation to figures 2 to 4.

Firstly, the wire store 50 can be easily and conveniently demounted from the mount device 75. This enables the store, with the wire still wound on the spool body 52, to be passed from one side of the windscreen to the other by prising out the already released corner of the windscreen to form a small gap and passing the spool through the gap. The required length may then be payed out from the spool 52 before being cut.

Secondly, the adjustable braking mechanism ensures that the cutting out process can be tailored to ensure that wire dispensing is accurately controlled. For example when setting out the wire around the periphery of the windscreen there are instances at which it is desirable to prevent any further wire from being pulled out from the store/dispenser. At such instances maximum brake force can be applied. At other instances it is desirable to permit the wire to be dispensed freely and therefore the brake system can be completely released. At other instances during the procedure, for example when slip cutting, some torque resistance is required and the present system enables the torque resistance applied for slip cutting to be readily adjusted and set to the level desired by the operator.

The provision of the store/dispenser device 50 having an annular outer sleeve 51 and which receives, seated therein, a relatively rotatable spool 52 upon which wire is wound is also advantageous. This provides for dispensing and or loading of the store device 50 in a controlled manner and prevents so called 'birds nesting' occurring. 'Birds nesting' occurs when a poorly constrained wound coil of wire springs of a spool in an uncontrolled manner thereafter becoming tangled, possibly kinked and difficult to use.

The present invention provides the benefits of wire cutting systems without over complex system apparatus arrangements or the need to re configure the apparatus significantly following initial set up. The technique can be used by operators of relatively little experience or physical strength following an initial set up routine of minimal complexity.

## Claims

1. A dispensing system for dispensing cutting wire to be used in a glazing panel cut out procedure, the system comprising;
a mounting device (75) arranged to be mounted on a glazing panel, the mounting device (75) being provided with a docking station for docking a wire store device (50), wherein the docking station is provided with rotary means operable to pay out cutting wire from the wire store device (50) and wherein the rotary means comprises a rotary device (90) to which the wire store device (50) is arranged to be coupled in docked demountable engagement;
a wire store device (50) arranged to be mounted on the docking station in order to dispense wire, the wire store device being demountable from the docking station; and
wherein the rotary device (75) and the wire store device (50) are provided with respective complementary engaging docking formations (70, 71, 106, 107) arranged to engage when the wire store device (50) is coupled to the rotary device (90).

2. A dispensing system according to claim 1, wherein the rotary means is controllable to adjust the applied torque required to operate the rotary means.

3. A dispensing system according to claim 2, wherein the system includes adjustable brake means (103) operable to adjust the applied torque required to operate the rotary means.

4. A dispensing system according to claim 3, wherein the adjustable brake means (103) comprises a friction brake which is tightenable to increase the braking effect or relaxable to reduce the braking effect.

5. A dispensing device according to any preceding claim, wherein when in docked engagement a spool (52) of the wire store device (50) is coupled for rotation with the rotary device (90).

6. A dispensing system according to any preceding claim, wherein the wire store device (50) has a central aperture (58) for accommodating the rotary device (90) in docked demountable engagement.

7. A dispensing system according to any preceding claim, wherein the engaging docking formations (70, 71, 106, 107) are arranged to permit the wire store device (50) to be mounted and demounted from the rotary device (90) but ensure that the wire store device (50) and rotary device (90) are coupled for rotation together in union when in the docked configuration.

8. A dispensing system according to any preceding claim, wherein the system includes adjustable brake means (103) engaging with the rotary device (90) and operable to adjust the applied torque required to operate the rotary device (90).

9. A dispensing system according to claim 8, wherein the adjustable brake means (103) is operated by a cam and lever (94).

10. A dispensing system according to any preceding claim, wherein the mounting device (75) arranged to be mounted on the glazing panel comprises a suction mount (77).

## Patentansprüche

1. Ausgabesystem zum Ausgeben eines Schneidedrahts, der zur Verwendung in einem Verfahren zum Heraustrennen einer Glasscheibe bestimmt ist, wobei das System Folgendes umfasst:
eine Befestigungsvorrichtung (75), die zum Befestigen an einer Glasscheibe angeordnet ist, wobei die Befestigungsvorrichtung (75) mit einer Andockstation zum Andocken einer Drahtbevorratungsvorrichtung (50) versehen ist, wobei die Andockstation mit einem Drehmittel versehen ist, das in der Lage ist, Schneidedraht aus der Drahtbevorratungsvorrichtung (50) ablaufen zu lassen, und wobei das Drehmittel eine Drehvorrichtung (90) umfasst, an die in angedocktem abnehmbaren Eingriff gekoppelt zu werden die Drahtbevorratungsvorrichtung (50) angeordnet ist,
eine Drahtbevorratungsvorrichtung (50), die zum Befestigen an der Andockstation angeordnet ist, um Draht auszugeben, wobei die Drahtbevorratungsvorrichtung von der Andockstation abnehmbar ist, und
wobei die Drehvorrichtung (75) und die Drahtbevorratungsvorrichtung (50) mit entsprechenden ergänzenden eingreifenden Andockausbildungen (70, 71, 106, 107) versehen sind, die so angeordnet sind, dass sie eingreifen, wenn die Drahtbevorratungsvorrichtung (50) an die Drehvorrichtung (90) gekoppelt ist.

2. Ausgabesystem nach Anspruch 1, wobei das Drehmittel steuerbar ist, um das zugrundegelegte Drehmoment, das erforderlich ist, um das Drehmittel zu betreiben, einzustellen.

3. Ausgabesystem nach Anspruch 2, wobei das System ein einstellbares Bremsmittel (103) umfasst, das in der Lage ist, das zugrundegelegte Drehmoment, das erforderlich ist, um das Drehmittel zu betreiben, einzustellen.

4. Ausgabesystem nach Anspruch 3, wobei das einstellbare Bremsmittel (103) eine Reibungsbremse umfasst, die anziehbar ist, um die Bremswirkung zu erhöhen, oder lockerbar ist, um die Bremswirkung zu reduzieren.

5. Ausgabevorrichtung nach einem der vorhergehenden Ansprüche, wobei bei angedocktem Eingriff eine Spule (52) der Drahtbevorratungsvorrichtung (50) zur Drehung mit der Drehvorrichtung (90) gekoppelt ist.

6. Ausgabesystem nach einem der vorhergehenden Ansprüche, wobei die Drahtbevorratungsvorrichtung (50) eine zentrale Öffnung (58) aufweist, um die Drehvorrichtung (90) in angedocktem abnehmbaren Eingriff unterzubringen.

7. Ausgabesystem nach einem der vorhergehenden Ansprüche, wobei die eingreifenden Andockausbildungen (70, 71, 106, 107) so angeordnet sind, dass sie es ermöglichen, dass die Drahtbevorratungsvorrichtung (50) an der Drehvorrichtung (90) befestigt und von derselben abgenommen werden kann, es jedoch sicherstellen, dass die Drahtbevorratungsvorrichtung (50) und die Drehvorrichtung (90) in der angedockten Anordnung zur gemeinsamen Drehung gekoppelt sind.

8. Ausgabesystem nach einem der vorhergehenden Ansprüche, wobei das System ein einstellbares Bremsmittel (103) umfasst, das mit der Drehvorrichtung (90) eingreift und in der Lage ist, das zugrundegelegte Drehmoment, das erforderlich ist, um die Drehvorrichtung (90) zu betreiben, einzustellen.

9. Ausgabesystem nach Anspruch 8, wobei das einstellbare Bremsmittel (103) durch einen Nocken und Hebel (94) betrieben wird.

10. Ausgabesystem nach einem der vorhergehenden Ansprüche, wobei die Befestigungsvorrichtung (75), die zur Befestigung an der Glasscheibe angeordnet ist, eine Saughalterung (77) umfasst.

## Revendications

1. Système de distribution pour distribuer un fil de coupe à utiliser dans une procédure de découpe de panneau de vitrage, le système comprenant :
un dispositif de montage (75) agencé pour être monté sur un panneau de vitrage, le dispositif de montage (75) étant pourvu d'une station d'accueil pour accueillir un dispositif de stockage de fil (50), la station d'accueil étant pourvue d'un moyen rotatif permettant de dévider le fil de coupe du dispositif de stockage de fil (50) et le moyen rotatif comprenant un dispositif rotatif (90) auquel le dispositif de stockage de fil (50) est agencé pour être accouplé dans une mise en prise démontable arrimée ;
un dispositif de stockage de fil (50) agencé pour être monté sur la station d'accueil afin de distribuer le fil, le dispositif de stockage de fil pouvant être démonté de la station d'accueil ; et
le dispositif rotatif (75) et le dispositif de stockage de fil (50) étant pourvus de formations d'amarrage de mise en prise complémentaires respectives (70, 71, 106, 107) agencées pour venir en prise lorsque le dispositif de stockage de fil (50) est accouplé au dispositif rotatif (90).

2. Système de distribution selon la revendication 1, le moyen rotatif pouvant être commandé pour ajuster le couple appliqué requis pour actionner le moyen rotatif.

3. Système de distribution selon la revendication 2, le système comprenant un moyen de freinage réglable (103) actionnable pour ajuster le couple appliqué requis pour actionner le moyen rotatif.

4. Système de distribution selon la revendication 3, le moyen de freinage réglable (103) comprenant un frein à friction qui peut être serré pour augmenter l'effet de freinage ou être desserré pour réduire l'effet de freinage.

5. Dispositif de distribution selon l'une quelconque des revendications précédentes, dans lequel, lorsqu'elle est en prise arrimée, une bobine (52) du dispositif de stockage de fil (50) est accouplée pour tourner avec le dispositif rotatif (90).

6. Système de distribution selon l'une quelconque des revendications précédentes, le dispositif de stockage de fil (50) comportant une ouverture centrale (58) pour recevoir le dispositif rotatif (90) dans un engagement démontable arrimé.

7. Système de distribution selon l'une quelconque des revendications précédentes, dans lequel les formations d'amarrage de mise en prise (70, 71, 106, 107) sont agencées pour permettre au dispositif de stockage de fil (50) d'être monté et démonté du dispositif rotatif (90) tout en assurant que le dispositif de stockage de fil (50) et le dispositif rotatif (90) sont accouplés en vue d'une rotation ensemble lors de la configuration arrimée.

8. Système de distribution selon l'une quelconque des revendications précédentes, le système comprenant un moyen de freinage réglable (103) venant en prise avec le dispositif rotatif (90) et actionnable pour ajuster le couple appliqué requis pour actionner le dispositif rotatif (90).

9. Système de distribution selon la revendication 8, le moyen de freinage réglable (103) étant actionné par une came et un levier (94).

10. Système de distribution selon l'une quelconque des revendications précédentes, le dispositif de montage (75) agencé pour être monté sur le panneau de vitrage comprenant une monture d'aspiration (77).
